Europäisches Patentamt

European Patent Office

Office européen des brevets

(11) Publication number: **0 211 487**
A1

# EUROPEAN PATENT APPLICATION

(21) Application number: 86304495.4

(22) Date of filing: 12.06.86

(51) Int. Cl.⁴: **G 06 F 9/38**
G 06 F 9/32

(30) Priority: 28.06.85 US 750383

(43) Date of publication of application:
25.02.87 Bulletin 87/9

(84) Designated Contracting States:
CH DE FR GB IT LI NL SE

(71) Applicant: Hewlett-Packard Company
P.O. Box 10301
Palo Alto California 94303-0890(US)

(72) Inventor: Baum, Allen J.
2310 Cornell Street
Palo Alto California 94306(US)

(72) Inventor: Miller, Terrence C.
169 Oak Court
Menlo Park California 94025(US)

(72) Inventor: Mahon, Michael J.
1975 Adele Place
San Jose California 95125(US)

(74) Representative: Colgan, Stephen James et al,
CARPMAELS & RANSFORD 43 Bloomsbury Square
London WC1A 2RA.(GB)

(54) Conditional operations in computers.

(57) A method is provided for conditional control over the execution of instructions in a digital computer without introducing residual state.

FIG 2

EP 0 211 487 A1

Croydon Printing Company Ltd.

## "CONDITIONAL OPERATIONS IN COMPUTERS"

### BACKGROUND

The ability to make decisions by conditional operations is an essential requirement for any computer system which performs useful work. Conditional operations are performed in digital computers typically by an instruction which sets a condition code register followed by a conditional branch instruction. The decision to branch or not to branch may be based on one or more events. The events, often referred to as condition codes, are held in a condition code register in the computer and include: positive, negative or zero numbers, overflow or underflow from the last arithmetic operation, even or odd parity, and many others. Conditional operations are used to construct such high level programming constructs as loops and if-then-else statements as well as functions such as minimum and maximum. Because the loops and if-then-else programming constructs are so common, it is essential that the conditional operations which implement them execute as efficiently as possible.

A computer instruction is executed by performing two or more steps. Typically, three steps are used. These steps are first to fetch the instruction pointed to by a program counter, second to decode and perform the operation indicated by the instruction and finally to save the results. A simple branch instruction changes the contents of the program counter to cause execution to 'jump' somewhere else. A conditional branch instruction performs a simple branch in response to a particular condition having

1

occurred.

In order to speed up the execution of computer instructions, a technique of executing more than one instruction at the same time, called pipelining, was developed. Pipelining permits, for example, the central processing unit to fetch one computer instruction while executing another computer instruction and while saving the results of a third computer instruction. In pipelined computer architectures, branching is an expensive operation because branch instructions may cause other instructions in the pipeline to be held up pending the outcome of the branch instruction. When a conditional branch instruction is executed with the condition true, it causes the computer to continue execution at a new address referred to as a target address. Since instruction fetching is going on simultaneously with instruction decoding and execution in a pipelined computer, the computer has already fetched the instruction following the branch instruction in the program by the time the computer has executed the branch statement. This is a different instruction than the instruction at the target address. Therefore, the computer must hold up the instruction pipeline following the branch instruction until the outcome of the branch instruction is known and the proper instruction is fetched.

One problem with the prior art approach using multi-cycle instructions or conditional branch instructions is the condition code register. This register must be updated properly at the beginning of each instruction in order for that instruction to function properly because the condition codes represent the residual state of the computer and are inputs to many

2

0211487

instructions in prior art computers.  In a prior art pipelined computer with several instructions executing at the same time, the timing on the delivery of the condition codes from the previous instruction to the condition code register is very critical.  In many prior art machines, this path from the arithmetic logic units and shifters which generate the condition codes to the condition code registers is often a critical path and controls the maximum speed of the computer system.

Another prior art approach to conditional operations is a space sequential skip instruction.  These instructions are typically limited to increment and decrement operations or other simple logical operations which skip the space sequential instruction on the occurrence of a limited number of conditions.  Although the space sequential instruction may be fetched into the pipeline, any errors, such as page faults generated by fetching the skipable instruction, are handled as errors which must be addressed by the computer system.  These instructions were typically implemented using microcode or as multi-cycle instructions.

What is needed is an approach to conditional operations which performs common logical and mathematical operations without the use of branch instructions relying on residual state, without the use of special operations, and without the use of microcode control.

## SUMMARY

In accordance with the preferred embodiment of the present invention, a

3

method is provided for conditional control over the execution of instructions in a digital computer without introducing residual state. In the preferred embodiment of the present invention, each arithmetic/logic instruction includes a condition specifier of three or four bits. If the condition specified by an instruction is satisfied by its operands or results, execution of the time sequential instruction is nullified. This provides the facility to conditionally skip a single instruction, or to conditionally branch to an arbitrary location in memory by making the successor instruction an unconditional branch.

The present invention is superior to the prior art in several ways. First, the preferred embodiment of the present invention avoids the need for a condition code register as used in the prior art. Second and more importantly, the preferred embodiment of the present invention avoids the timing delays of the prior art caused by the delay in transferring the condition codes into the condition code register. Third, the preferred embodiment of the present invention permits the operation and skip decision to be performed in one instruction rather than the two instructions of the prior art. Finally, the preferred embodiment of the present invention avoids the problems of a pipelined architectures in the handling of the condition codes after an error condition has occurred.

## DESCRIPTION OF DRAWINGS

Figure 1 is a arithmetic/logic instruction in accordance with the preferred embodiment of the present invention.

Figure 2 illustrates a method of conditional control over the execution of instructions in accordance with the preferred embodiment of the present invention.

## DESCRIPTION OF THE PREFERRED EMBODIMENT

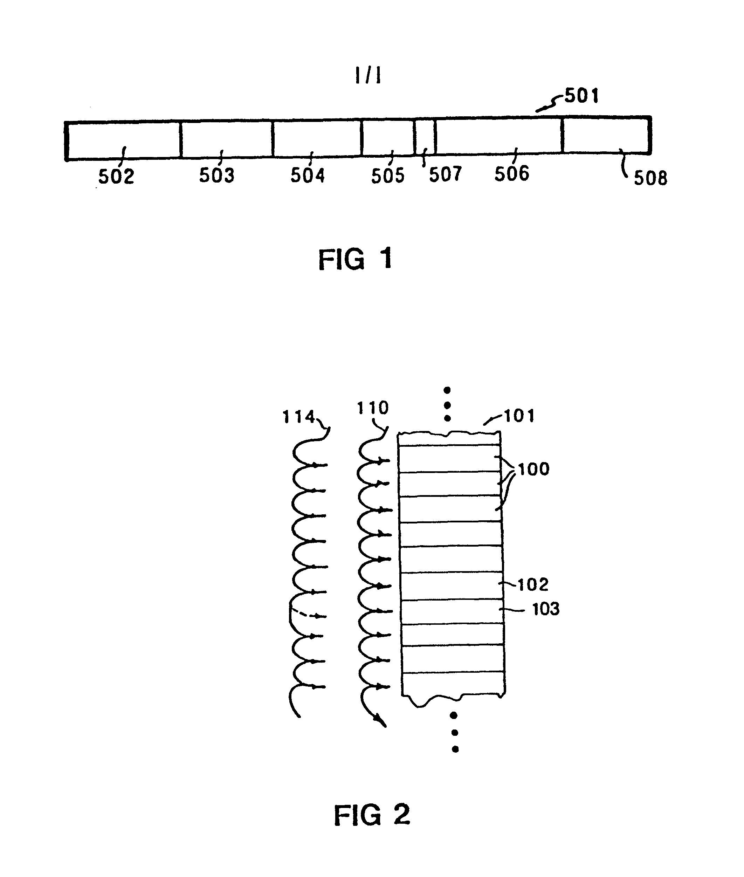

Figure 1 is an arithmetic/logic instruction in accordance with the preferred embodiment of the present invention. The arithmetic/logic instruction 501 consists of 32 bits of information used by the computer to execute the instruction. This instruction combines the function of branching with an arithmetic/logic operation on two operands. The instruction 501 contains a six bit operation code field 502, a five bit first operand register address field 503, a five bit second operand register address field 504, a three bit condition code field 505, a five bit result register address field 508, a seven bit extended operand field 506, and a nullify bit 507. The operation code field 502 together with the extended operand field 506 identify this instruction as arithmetic/logic, for example, an add instruction. The first and second operand register address fields 503 and 504 identify the registers on whose contents the operation will be performed. The result register address field 508 identifies the register where the result will be stored. In the preferred embodiment of the present invention, the next instruction in the instruction pipeline may be nullified upon the occurrence of a condition by setting the nullify bit 507 and the condition code field 505.

In a pipelined computer system there are two distinct concepts as to

5

the next instruction to be executed. The first concept is a time sequential instruction, which is the next instruction in the instruction pipeline after the current instruction. This instruction will be executed after the current instruction and the results of the operation stored unless nullified. The second concept is a space sequential instruction. This is the instruction immediately following the current instruction in the program. Generally, the space sequential instruction for the current instruction will be the time sequential instruction. The exception to the rule occurs with taken branch instructions. Before a branch instruction has been executed the computer will fetch the space sequential instruction into its pipeline making it the time sequential instruction. After the branch is executed the time sequential instruction will become the current instruction and the next instruction fetched is from the target address. The instruction at the target address is not the space sequential instruction of the current instruction.

In the preferred embodiment of the present invention, the execution of the time sequential instruction may be nullified upon the occurrence of a condition by setting the nullify bit 507 and the condition code field 505 in the currently executing arithmetic/logic instruction. The purpose of nullification is to make the instruction appear as if it never existed even though the instruction has been fetched and the indicated operation performed. Nullification is accomplished by preventing that instruction from changing any state of the computer. To prevent changing the state of — the computer, the nullification process must prevent the writing of the

6

results of the nullified instruction to both registers and memory and prevent side effects from occurring, for example, the generation of interrupts caused by the nullified instruction. This is performed in the preferred embodiment by qualifying the write signals with a nullify signal generated by the previous arithmetic/logic instruction thus preventing the current instruction from storing any results of any calculation or otherwise changing the state of the computer system. A simple way of qualifying the write signals is by 'AND'ing the write signals with a retained copy of the nullify signal. One convenient location to save the copy of the nullify signal is the processor status word. In the preferred embodiment of the present invention, the nullify bit of the current arithmetic/logic instruction may be used to generate a nullify signal to nullify the following instruction. First, the nullify signal is generated and saved in the processor status word if the condition code field 505 matches the conditions resulting from the arithmetic/logic operation and the nullify bit is on. Then when the following instruction has been executed, the retained copy of the nullify signal is use to qualify the write signals to prevent the results of the following instruction from being stored in registers and memory, as well as, changing any other state information in the computer system.

Figure 2 illustrates a method of conditional control over the execution of instructions in accordance with preferred embodiment of the present invention. A computer practicing the method of Figure 2 has a program 101 consisting of instructions 100 including a arithmetic/logic instruction 102.

7

The space sequential instruction to the arithmetic/logic instruction 102 is instruction 103. The execution of the program is represented by graphs 110 and 114. In normal execution, the program executes the current instruction and then executes the space sequential instruction to the current instruction.

Graph 110 illustrates the operation of an arithmetic/logic instruction with the nullify bit off. With the nullify bit off, the arithmetic/logic instruction performs the operation indicated by the operation code and the extended operation code fields. Execution continues with time sequential instruction, which is usually the space sequential instruction to the arithmetic/logic instruction.

Graphs 110 and 114 illustrate the operation of an arithmetic/logic instruction with the nullify bit is on. With the nullify bit on, the execution of the time sequential instruction is dependent on the condition codes generated by the arithmetic/logic instruction. When the condition code field 505 of the instruction does not match the condition codes generated by the operation performed by the arithmetic/logic instruction, execution continues with the space sequential instruction 103 as shown in graph 110. When the condition code field of the instruction matches the condition codes generated by the operation performed by the arithmetic/logic instruction, the time sequential instruction is nullified and execution continues with the instruction following the nullified time sequential instruction.

In the preferred embodiment of the present invention, the condition codes are not stored in a register which subsequent instructions may examine. The condition codes exist only as long as the instruction which generated them is being executed. This removes the critical path to the condition code register of the prior art. This also eliminates the need to restore condition codes when an error occurs during the execution of an instruction, since restarting the instruction will regenerate any condition codes needed by the instruction. In a pipelined computer, the condition codes are passed along with the instruction in the pipeline which simplifies design of the computer system. Finally, the condition codes are not a residual state of the computer which must be saved by the operating system during context switches.

9

## CLAIMS

1. A method for conditional control over the execution in a program of a first instruction, having a condition field, and a second instruction, being the time sequential instruction of the first instruction, in a digital computer without introducing residual state, the method comprising:

performing the operation specified by the first instruction;

generating a condition code from the performed operation; and

performing the operation specified by the second instruction or an exception resulting from an attempt to perform the second instruction, unless the condition field of the first instruction matches the condition codes generated by the operation of the first instruction.

2. A computer when programmed to operate according to the method as claimed in claim 1.

1/1

501

502    503    504    505    507    506    508

# FIG 1

114    110    101

100

102
103

# FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 577 190 (COCKE et al.) <br> * Column 1, line 70 - column 3, line 64; column 4, line 54 - column 5, line 6; column 14, lines 3-61 * <br> --- | 1,2 | G 06 F 9/38 <br> G 06 F 9/32 |
| A | GB-A-2 148 562 (MARCONI) <br> * Page 5, line 63 - page 6, line 8; page 7, lines 13-15 * <br> --- | 1,2 | |
| A | GB-A-1 480 209 (DATA-LOOP LTD.) <br> * Page 1, lines 21-60; page 1, line 81 - page 2, line 95 * <br> --- | 1,2 | |
| A | IBM TECHNICAL DISCLOSURE BULLETIN, vol. 14, no. 7, December 1971, page 2109, New York, US; J.R. BROWN et al.: "Conditionally executable instructions" <br> * Whole document * <br> --- | 1 | |
| A | IBM TECHNICAL DISCLOSURE BULLETIN, vol. 23, no. 4, September 1980, pages 1725,1726, New York, US; H. SACHAR: "Fast resolution of condition code for some logical operations" <br> ---    -/- | 1,2 | TECHNICAL FIELDS SEARCHED (Int. Cl.4) <br><br> G 06 F 9/38 <br> G 06 F 9/32 |

The present search report has been drawn up for all claims

| Place of search | Date of completion of the search | Examiner |
|---|---|---|
| THE HAGUE | 24-09-1986 | QUESSON C.J. |

**European Patent Office**

**EUROPEAN SEARCH REPORT**

| | DOCUMENTS CONSIDERED TO BE RELEVANT | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | US-A-3 766 527 (J.C. BRILEY)<br>* Column 2, lines 7-54 *<br>---<br><br>----- | 1,2 | | |

TECHNICAL FIELDS SEARCHED (Int. Cl.4)

The present search report has been drawn up for all claims

| Place of search | Date of completion of the search | Examiner |
|---|---|---|
| THE HAGUE | 24-09-1986 | QUESSON C.J. |